# EUROPÄISCHE PATENTANMELDUNG

(11) **EP 4 067 072 A2**
(43) Veröffentlichungstag der Anmeldung: **05.10.2022**
(21) Anmeldenummer: 22162393.7
(22) Anmeldetag: 16.03.2022
(51) Int. Cl.: B32B 18/00, C04B 35/46, C04B 35/505, C04B 35/638, C04B 35/486, C04B 35/634, C04B 35/626

(54) **BAUTEILE AUS EINEM KERAMISCHEN WERKSTOFFVERBUND UND VERFAHREN ZU SEINER HERSTELLUNG**

(30) Priorität: 29.03.2021 DE 102021107865
(71) Anmelder: Fraunhofer-Gesellschaft zur Förderung der angewandten Forschung e.V., 80686 München (DE)
(72) Erfinder: MORITZ, Tassilo, 09599 Freiberg (DE); Schwarzer-Fischer, Eric, 01277 Dresden (DE); Günther, Anne, 01277 Dresden (DE); Roszeitis, Sven, 01277 Dresden (DE)
(74) Vertreter: Rauschenbach, Marion

(57) **Zusammenfassung**

Die Erfindung bezieht sich auf die Gebiete der Werkstoffwissenschaft und der Verfahrenstechnik und betrifft Bauteile aus einem keramischen Werkstoffverbund, die beispielsweise in thermoelektrischen Generatoren eingesetzt werden können, sowie ein Verfahren zu ihrer Herstellung.

Aufgabe der vorliegenden Erfindung ist die Angabe von Bauteilen aus einem keramischen Werkstoffverbund, die neben gleichzeitig elektrisch leitenden und elektrisch isolierenden Bereichen eine hohe Bauteilkomplexität aufweisen und weiterhin durch ein einfaches und kostengünstiges Verfahren, auch im industriellen Maßstab, herstellbar sind.

Die Aufgabe wird gelöst durch Bauteile aus einem keramischen Werkstoffverbund, die aus Sinterkörpern bestehen, die mindestens gleichzeitig zwei oder mehr Bereiche aufweisen, die mindestens aus einem keramischen Material mit elektrisch leitenden Eigenschaften und aus einem keramischen Material mit elektrisch isolierenden Eigenschaften bestehen, wobei die Bereiche mindestens stoffschlüssig und/oder formschlüssig und/oder kraftschlüssig miteinander verbunden sind, und die Bauteile eine komplexe Bauteilgeometrie aufweisen.

## Beschreibung

Die Erfindung bezieht sich auf die Gebiete der Werkstoffwissenschaft und der Verfahrenstechnik und betrifft Bauteile aus einem keramischen Werkstoffverbund, die beispielsweise in thermoelektrischen Generatoren eingesetzt oder als keramische Elektroden zur elektrolytischen Spaltung von Wasser oder zur Erzeugung von Atmosphärendruck-Plasmen eingesetzt werden können, sowie ein Verfahren zu ihrer Herstellung.

Die Eigenschaftskombination aus elektrischer Leitfähigkeit und elektrischer Isolierung ist für Materialien zur Herstellung von keramischen Bauteilen für verschiede Anwendungen von großer Bedeutung. Dies ist beispielsweise für Anwendungen in Heizelementen, Glühzündern, thermoelektrischen Generatoren, Plasmaelektroden oder Sensoren von außerordentlicher Bedeutung. Neben den elektrischen Eigenschaften spielen dabei vor allem die Hochtemperaturbeständigkeit, die Korrosions- und Verschleißbeständigkeit, die Permittivität sowie die mechanischen Eigenschaften der keramischen Materialien eine wichtige Rolle.

Generell müssen bei der Herstellung von keramischen Werkstoffverbunden eine Reihe von Anforderungen an die Materialkombination erfüllt werden:
- der thermische Ausdehnungskoeffizient beider zu verbindender keramischer Komponenten muss über einen weiten Temperaturbereich vergleichbar sein, damit dies während der Wärmebehandlung und unter Einsatzbedingungen nicht zu kritischen Spannungen im Bauteil zu führt;
- die keramischen Komponenten müssen chemisch kompatibel sein, d. h. ihre Eigenschaften dürfen sich gegenseitig möglichst nicht negativ beeinflussen, und dürfen unter Einsatzbedingungen nicht miteinander reagieren und,
- da die Herstellung der Bauteile aus den unterschiedlichen keramischen Komponenten zumeist über eine Co-Sinterung erfolgt, müssen die keramischen Komponenten unter identischen Sinterbedingungen, d. h. Temperatur, Gasatmosphäre und -druck, chemisch beständig, verdichtbar und sinterbar sein.

Zusätzlich zu der Kombination von Eigenschaften der keramischen Komponenten und den Anforderungen für die Herstellungsverfahren der keramischen Werkstoffverbunde müssen weitere Kriterien für derartige keramische Verbunde berücksichtigt werden, die sich aus deren Anwendungen ergeben. Die Anwendungen derartiger multifunktioneller Bauteile aus keramischen Werkstoffverbunden verlangen nach immer komplexerer Bauteilgeometrie und großserientauglicher Fertigung, sowie nach individualisierten Lösungen. Eine Fertigung derartiger Bauteile ohne zusätzlichen Fügeaufwand über eine Co-Sinterung gewinnt dafür zunehmend an Bedeutung. Als großserientaugliches Fertigungsverfahren bietet sich daher der Mehrkomponenten-Pulverspritzguss (Multi-K-PIM) an. Zur Fertigung von individualisierten Bauteilen höchster geometrischer Komplexität stehen mehrere keramische additive Verfahren zur Verfügung. Jedoch sind bislang nur wenige Verfahren, wie z. B. Fused Filament Fabrication (FFF), Multi Material Jetting (MMJ) oder Vat Photopolymerization (VPP) zur Herstellung dichter und mehrkomponentiger Bauteile verfügbar. Tatsächlich ist das VPP-Verfahren auf dem Markt bisher der einzige erfolgreich kommerzialisierte Verarbeitungsweg für additiv hergestellte, dichte keramische Komponenten. Das VPP-Verfahren ermöglicht unter den Additiven Fertigungsmethoden die bestmögliche geometrische Auflösung von Strukturdetails mit Toleranzen von ±100 µm. Der Nachteil dieser Methode liegt allerdings in einer erforderlichen Transluzenz der Pulverpartikeln für sichtbares oder UV-Licht (365-500 nm), um die Suspensionen nach dem schichtweisen Auftrag mit einem Laser oder einem DLP-Modul mit der entsprechenden Wellenlänge zu vernetzen und damit zu konsolidieren. Keramische, elektrisch leitfähige Materialien, wie z. B. Titansuboxide, TiN, TiB₂, TiC, ZrC, TaN, SiC oder B₄C weisen eine dunkle bis metallisch glänzende Färbung auf. Diese Keramiken sind für sichtbares Licht nicht transparent und daher nicht über VPP direkt verarbeitbar.

Diese keramischen, elektrisch leitfähigen Materialien können zusammen mit keramischen, elektrisch isolierenden Materialien zu einem Werkstoffverbund verarbeitet und mit anderen Formgebungsverfahren, wie beispielsweise FFF oder Multi-K-Spritzguss zu einem Bauteil verarbeitet werden. Dabei können diese keramischen, elektrisch leitfähigen Materialien auch mit nicht transluzenten Werkstoffen, wie Nickel-Chrom-Stählen oder Hartmetallen, kombiniert werden. Die thermischen Ausdehnungskoeffizienten derartiger Verbundkomponenten müssen ebenfalls über einen weiten Temperaturbereich annähernd zusammenpassen, um sie kombinieren zu können. Ebenso ist dann eine gemeinsame Wärmebehandlung unter reduzierenden Atmosphären, wie sie beispielsweise zur Bildung von Titansuboxiden benötigt werden, möglich.

Als Titansuboxide werden die Oxide bezeichnet, die von der Stöchiometrie des Titandioxids abweichen, also ein Ti : O-Verhältnis von > 1:2 aufweisen oder, anders ausgedrückt, TiOₓ, wobei 0 < x < 2 ist. Titansuboxide können hinsichtlich ihrer elektrischen Leitfähigkeit in weiten Bereichen modifiziert werden (M. Backhaus-Ricoult, et al: J.Electr.Mat. 41 (2012), 1636-1647; Y.Lu, et al: Adv. Mater. Res. 415-417 (2012), 1291-1296).

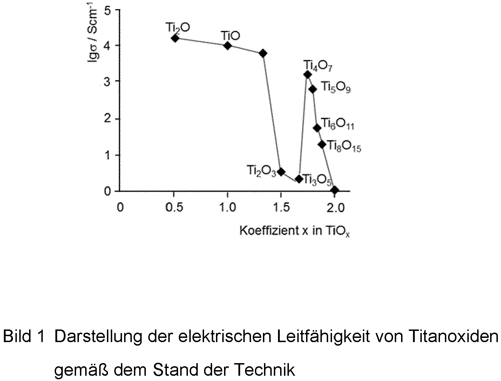

So ist das Titandioxid (TiO₂) mit einem Widerstand von Rₛₚ=10¹² Qcm elektrisch isolierend. Titansuboxid (TiOₓ)-Werkstoffe sind elektrisch leitfähig. Zum Beispiel erreicht die Magnéli-Phase Ti₄O₇ mit einem Rₛₚ ~ 10⁻³ Ωcm eine metallähnliche Leitfähigkeit (siehe Bild 1).

Zwischen den beiden extremen Werten 10¹³ und ~10⁻³ Ωcm können fast alle elektrischen Widerstände auch durch Mischen der Einzelphasen der verschiedenen Titanoxide eingestellt werden. Insbesondere im Bereich der Magnéli-Phasen (TiₙO₂ₙ₋₁ mit 4≤n<10) ist es möglich, den elektrischen Widerstand von Titansuboxidkeramiken von 10⁻¹ bis 10⁻³ Ωcm einzustellen. Dazu können zwei benachbarte Magnéli-Phasen gemischt werden, die dann entsprechend dem Mischungsverhältnis einen definierten elektrischen Widerstand erhalten (H.-P. Martin: Werkstoffe und Fertigung 02/2018; M. Backhaus-Ricoult, et al: J.Electr.Mat. 41 (2012)).

Weitere Optionen zur Widerstandsanpassung bieten Ti-O-Verbindungen auch außerhalb des Bereichs der Magnéli-Phasen (A. Zaleska: Recent Patents on Engineering 2 (2008), 157-164).

Die verschiedenen (Ti-O)-Phasenanteile können über die Mischung eines der Titansuboxide mit Titandioxid mittels drucklosen Sinterns unter Inertgasatmosphäre hergestellt werden und Dichten von > 90% erreichen.

Die Herstellung von mechanisch stabilen und dichtgesinterten Titansuboxiden erfordert ein hohes technisches Know-how, wenn auf kostenintensive Verfahren wie druckunterstütztes Sintern oder Sintern mit reduzierenden Gasatmosphären, verzichtet werden möchte (L. Hao: J. Alloys Comp. 722 (2017), 846-851; Z. Weng, et al: J. Europ.Ceram. Soc. 37 (2017), 4667-4672).

Titansuboxidelektroden werden bereits kommerziell hergestellt (J.R. Smith, et al: J. Appl. Electrochem. 28 (1998), 1021-1033; F.C. Walsh, et al: Electchimica Acta 55 (2010), 6342-6351); besetzen allerdings bisher eher Nischenmärkte. Insbesondere die hohe chemische Stabilität, eine ausreichend gute elektrische Leitfähigkeit sowie hohe Abrasionsbeständigkeit zeichnen sie gegenüber Metall- oder Grafitelektroden aus.

Neben dem Einsatz als Elektrode werden derzeit zahlreiche weitere Anwendungsfelder für Titansuboxide erschlossen (B. Xu, et al: RSC Adv. 6 (2016), 79706-79722; A. Zaleska: Recent Patents on Engineering 2 (2008), 157-164). Dazu gehören die Photovoltaik, Katalysatoren, die Batterietechnik oder die Umwelttechnik. Der definierten Einstellung der elektrischen Eigenschaften waren in der Vergangenheit verschiedene grundlegende Arbeiten gewidmet (M. Backhaus-Ricoult et al: J.Electr.Mat. 41 (2012), 1636-1647; A. Zaleska: Recent Patents on Engineering 2 (2008), 157-164). Dazu wurden insbesondere Untersuchungen mit einphasigen Titansuboxiden durchgeführt und Berechnungen auf festkörperphysikalischer Grundlage durchgeführt. Auch der Einsatz als thermoelektrischer Werkstoff wurde diskutiert, bei der neben der elektrischen Leitfähigkeit, die Wärmeleitfähigkeit und der Seebeck-Koeffizient von Bedeutung sind (M. Backhaus-Ricoult et al: J.Electr.Mat. 41 (2012), 1636-1647; H.-P. Martin et al: J. Electr. Mat. 45 (2016), 1570-1575).

Die Co-Sinterung verschiedener Magnéli-Phasen miteinander wurde bereits von H.-P. Martin et al: J. Electr. Mat. 45 (2016), 1570-1575) beschrieben.

F.C. Walsh et al: Electchimica Acta 55 (2010), 6342-6351 beschreibt die Verfügbarkeit von Stäben, Platten und Rohren aus Titansuboxid.

Ebonex^{®} besteht hauptsächlich aus der Magnéli-Phase Ti₄O₇, welche die höchste elektrische Leitfähigkeit unter den Magnéli-Phasen (TiₙO₂ₙ₋₁, n=4...9) erreicht. Die Herstellung erfolgt über einen relativ langen Sinterprozess unter reduzierender Atmosphäre.

Eine komplexe Formgebung ist jedoch mit dem Herstellungsverfahren für die Ebonex^{®}-Elektroden nicht möglich.

Die gemeinsame Sinterung von elektrisch leitfähigen und isolierenden keramischen Komponenten zu Bauteilen ist Stand der Technik.

Beispielsweise werden keramische Heizelemente aus Kompositkeramiken auf der Basis von Siliciumnitrid Si₃N₄ oder auf Basis von Aluminiumoxid AIN industriell gefertigt. Hierzu wird eine leitfähige Komponente wie z.B. TaN zu dem elektrisch isolierenden Si₃N₄ gemischt, so dass über Perkolation entweder ein elektrisch leitfähiger oder ein elektrisch isolierender Werkstoff erhalten wird, die hinsichtlich der Zusammensetzung relativ eng beieinander liegen. Die ähnliche Zusammensetzung ermöglicht eine gemeinsame Sinterung der unterschiedlich leitfähigen Komponenten.

Nachteilig bei diesen Werkstoffkombinationen ist jedoch, dass sie nicht mittels Verfahren hergestellt werden können, die ausschließlich für transluzente Materialien geeignet sind. Außerdem ist, anders als bei Titansuboxiden, keine stufenlose Einstellung des elektrischen Widerstandes möglich.

In EP 0 369 238 B1 wird ein Sauerstoffsensor zur Erfassung der Sauerstoffkonzentration in einem Abgas mit einem Sensorelement beschrieben, wobei das Sensorelement eine Schutzschicht aufweist, welche aus einem wärmebeständigen Metalloxid hergestellt ist und eine Komponente der Nebengruppe Ila auf der dem Abgas des Sensorelements ausgesetzten Seite trägt. In mindestens einem Teil der Schutzschicht besteht das wärmebeständige Metalloxid aus einer Verbindung mit einer vorher ausgewählten nichtstöchiometrischen Zusammensetzung aus Metall- und Sauerstoffatomen. Die nichtstöchiometrische Verbindung kann dabei in Form von Titandioxidpartikeln vorliegen. Ebenso kann es sich um Titansuboxidpartikeln handeln. Der Hauptkörper des Sensorelements kann aus einem Zr0₂-Festelektrolyten hergestellt sein. Die nichtstöchiometrische Verbindung wird durch vorherige Erwärmung von Ti0₂-Partikeln unter einer nichtoxidierenden Atmosphäre bei einer Temperatur von nicht weniger als 600°C oder durch Wärmebehandlung von Titandioxidpulver mit einem Salz eines Edelmetallkatalysators in Luft hergestellt.

Darüber hinaus sind Ebonex^{®} oder Magnéli-Phasen-Titanoxide als Materialien für Katalysatorträger, bipolare Elektroden oder Flussfeldplattenanwendungen in Brennstoffzellen bekannt.

US 5,281,496 A1 und US 5,173,215 A1 beschreiben die Herstellung und Verarbeitung von Magnéli-Phasen-Partikeln. Brennstoffzellen werden als mögliche Anwendung erwähnt.

Die US 2007/0248752 A1 beschreibt ein Verfahren zum Aufbringen von Platin auf verschiedene Materialien, einschließlich Kohlenstoff und Magnéli-Phasen-Titansuboxide, zur Verwendung in Katalysatorschichten für Sauerstoffreduktionselektroden.

Aus der US 6,517,962 A1 und der US 2004/0157110 A1 sind die Verwendung von katalysierten Magnéli-Phasen-Titansuboxiden als Elektrodenmaterialien, die tolerant gegenüber Spannungsumkehr in Brennstoffzellenanwendungen sind, bekannt.

Gemäß der US 6,790,554 B4 ist die Verwendung von verschiedenen Materialien, darunter Ebonex^{®}, als Substrate für bipolare Brennstoffzellenelektroden bekannt. US 5,635,039 beschreibt das Design von MEAs auf der Basis von metallischen Substraten, wobei auch Titansuboxide als mögliche Komponenten genannt sind.

In der US 5,143,522 A1 wird eine Schleifkornzusammensetzung aus 20 - 50 Ma.-% ZrO₂ und 1,5 - 10 Ma.-% reduziertem Titanoxid, 0,03 - 0,5 Ma.-% Kohlenstoff, bis zu 3 Ma.-% Verunreinigungen, sowie zum Bilanzausgleich Al₂O₃ beschrieben. Der Anteil an reduziertem Titanoxid dient dabei einer Verbesserung des Verhaltens des Schleifkorns unter Druck und von dessen Reibungseigenschaften. Die Herstellung des Schleifkorns erfolgt durch Schmelzen des kombinierten Aluminiumoxids und Zirkoniumoxids. Nach dem Schmelzen der Kombination aus Aluminiumoxid und Zirkoniumoxid werden das Titanoxid und der Kohlenstoff zugegeben und durch Erhitzen der kombinierten Bestandteile unter Bedingungen eines Reduktionsofens das Titandioxid geschmolzen und durch den Kohlenstoff reduziert. Dann wird die geschmolzene Zusammensetzung auf ein wärmesenkendes Material gegossen, so dass eine Verfestigung der Schmelze in weniger als drei Minuten bewirkt wird.

Nachteilig bei den bekannten Lösungen des Standes der Technik ist, dass mit den bekannten Verfahren keramische Werkstoffverbunde mit unterschiedlichen und insbesondere gegensätzlichen Eigenschaften, wie elektrisch leitfähig und elektrisch isolierend, nicht in einfacher Art und Weise mit einem Herstellungsverfahren und mit hoher Komplexität der Bauteile und unter Beibehaltung aller weiteren positiven Eigenschaften eines keramischen Werkstoffs herstellbar und/oder nicht industriell herstellbar sind.

Aufgabe der vorliegenden Erfindung ist die Angabe von Bauteilen aus einem keramischen Werkstoffverbund, die neben gleichzeitig elektrisch leitenden und elektrisch isolierenden Bereichen eine hohe Bauteilkomplexität aufweisen und weiterhin durch ein einfaches und kostengünstiges Verfahren, auch im industriellen Maßstab, herstellbar sind.

Die Aufgabe wird durch die in den Patentansprüchen angegebene Erfindung gelöst. Vorteilhafte Ausgestaltungen sind Gegenstand der Unteransprüche, wobei die Erfindung auch Kombinationen der einzelnen abhängigen Patentansprüche im Sinne einer Und-Verknüpfung miteinschließt, solange sie sich nicht gegenseitig ausschließen.

Die erfindungsgemäßen Bauteile aus einem keramischen Werkstoffverbund bestehen aus Sinterkörpern, die mindestens gleichzeitig zwei oder mehr Bereiche aufweisen, die mindestens aus einem keramischen Material mit elektrisch leitenden Eigenschaften und mindestens aus einem keramischen Material mit elektrisch isolierenden Eigenschaften bestehen, wobei die Bereiche mindestens stoffschlüssig und/oder formschlüssig und/oder kraftschlüssig miteinander verbunden sind, und die Bauteile eine komplexe Bauteilgeometrie aufweisen.

Vorteilhafterweise sind als keramisches Material mit elektrisch leitenden Eigenschaften ein oder mehrere Titansuboxide TiOₓ mit 0 < x < 2 vorhanden, und als keramisches Material mit elektrisch isolierenden Eigenschaften TiO₂, ZrO₂, Y₂O₃ und/oder Cordierit (Mg₂Al₄Si₅O₁₈), wobei auch Mischungen dieser Materialien vorhanden sein können.

Weiterhin vorteilhafterweise sind die gleichzeitig vorhandenen Bereiche aus einem keramischen Material mit elektrisch leitenden Eigenschaften und aus einem keramischen Material mit elektrisch isolierenden Eigenschaften stoffschlüssig oder formschlüssig oder kraftschlüssig miteinander verbunden.

Ebenfalls vorteilhafterweise sind die Bauteile mittels lithografie-basierter additiver Fertigungsmethoden hergestellt worden.

Und auch vorteilhafterweise weisen die Sinterkörper in den Bereichen der unterschiedlichen keramischen Materialien jeweils eine Dichte von mindestens 70 % der theoretischen Dichte des jeweiligen keramischen Materials auf.

Vorteilhaft ist es auch, wenn die Bereiche aus einem keramischen Material mit elektrisch leitenden Eigenschaften als Leiterbahnen oder als Elektroden in, an oder auf den Bereichen aus dem keramischen Material mit elektrisch isolierenden Eigenschaften angeordnet sind.

Bei dem erfindungsgemäßen Verfahren zur Herstellung von Bauteilen aus einem keramischen Werkstoffverbund werden
- aus einem oder mindestens zwei verschiedenen pulverförmigen keramischen Materialien mit elektrisch isolierenden Eigenschaften, wobei mindestens eines dieser pulverförmigen keramischen Materialien mindestens teilweise zu einer Transformation während der Sinterung in ein keramisches Material mit elektrisch leitenden Eigenschaften befähigt ist, mittels additiver lithografischer oder nichtlithografischer Formgebungsverfahren Formkörper hergestellt, und nachfolgend werden die entbinderten Formkörper gesintert, wobei während des Sinterprozesses mindestens ein Wechsel der Sinteratmosphäre durchgeführt wird,
   oder es werden
- aus mindestens einem pulverförmigen keramischen Material mit elektrisch isolierenden Eigenschaften und aus mindestens einem pulverförmigen keramischen Material mit elektrisch leitenden Eigenschaften mittels nichtlithografischer Formgebungsverfahren Formkörper hergestellt, und nachfolgend die entbinderten Formkörper in einer nicht-oxidierenden Sinteratmosphäre gesintert.

Vorteilhafterweise werden
- als pulverförmige keramische Materialien mit elektrisch leitenden Eigenschaften ein oder mehrere Titansuboxide TiOₓ mit 0 < x < 2 eingesetzt,
   und
- als pulverförmige keramische Materialien mit elektrisch isolierenden Eigenschaften werden TiO₂, ZrO₂, Y₂O₃ und/oder Cordierit (Mg₂Al₄Si₅O₁₈),
einzeln oder in Mischungen eingesetzt.

Ebenfalls vorteilhafterweise werden aus einem oder mindestens zwei pulverförmigen keramischen Materialien mit elektrisch isolierenden Eigenschaften mittels des Vat Photopolymerization (VPP)-Verfahrens als additives lithografisches Verfahren entbinderte Formkörper hergestellt, wobei das mindestens eine pulverförmige keramische Material mit elektrisch isolierenden Eigenschaften mindestens teilweise und von mindestens zwei pulverförmigen keramischen Materialien mit elektrisch isolierenden Eigenschaften mindestens ein pulverförmiges keramischen Material mit elektrisch isolierenden Eigenschaften mindestens teilweise befähigt ist, während der nachfolgenden Sinterung in ein keramisches Material mit elektrisch leitenden Eigenschaften zu transformieren.

Weiterhin vorteilhafterweise werden aus pulverförmigen keramischen Materialien mit elektrisch isolierenden Eigenschaften und aus pulverförmigen keramischen Materialien mit elektrisch leitenden Eigenschaften mittels bekannter pulvertechnologischer Formgebungsverfahren als nichtlithografischer Formgebungsverfahren, wie Co-Spritzgießen, Co-Extrudieren, Verbundfoliengießen, Folienlaminieren, Co-Schlickergießen, Co-Pulverpressen, Multi Material Jetting, Fused Filament Fabrication Formkörper hergestellt.

Und auch vorteilhafterweise wird die gesamte Sinterung der entbinderten Formkörper mit Aufheizen bis zu einer maximalen Sintertemperatur und Halten bei dieser Temperatur und Abkühlung unter nicht-oxidierenden Sinterbedingungen dann unter einer reduzierenden Gasatmosphäre durchgeführt.

Vorteilhaft ist es auch, wenn die Sinterung der entbinderten Formkörper realisiert wird, indem die entbinderten Formkörper auf eine maximale Sintertemperatur aufgeheizt, dort gehalten und dann abgekühlt werden, wobei während des Aufheizens der entbinderte Formkörper unter reduzierender Gasatmosphäre und mindestens während eines Teils der Haltezeit bei der maximalen Sintertemperatur die Sinterung im Vakuum oder in inerter Gasatmosphäre durchgeführt wird, und während der Abkühlung wiederum ein Atmosphärenwechsel in eine reduzierende Gasatmosphäre durchgeführt wird.

Weiterhin vorteilhaft ist es, wenn nach 5 bis 50 %, vorteilhafterweise nach 20 bis 40 %, noch vorteilhafterweise nach 20 bis 25 %, der Haltezeit bei der maximalen Sintertemperatur ein Atmosphärenwechsel durchgeführt wird.

Und auch vorteilhaft ist es, wenn als maximale Sintertemperatur eine Temperatur von mindestens 1100 °C realisiert wird.

Ebenfalls vorteilhaft ist es, wenn mindestens eine Haltezeit von mindestens 30 min bei der maximalen Sintertemperatur realisiert wird.

Von Vorteil ist es auch, wenn zur Realisierung der nicht-oxdierenden Bedingungen bei der Sinterung als reduzierende Gasatmosphäre eine Wasserstoff-, Stickstoff-Wasserstoff-, Argon-Wasserstoff- oder Kohlenmonoxid-Atmosphäre eingesetzt wird.

Und ebenfalls von Vorteil ist es, wenn als inerte Gasatmosphäre eine Stickstoff- oder Argon-Atmosphäre eingesetzt wird.

Mit der vorliegenden Erfindung ist es erstmals möglich, Bauteile aus einem keramischen Werkstoffverbund anzugeben, die neben gleichzeitig elektrisch leitenden und elektrisch isolierenden Bereichen eine hohe Bauteilkomplexität aufweisen und weiterhin durch ein einfaches und kostengünstiges Verfahren, auch im industriellen Maßstab, herstellbar sind.

Unter Werkstoff oder Werkstoffverbund soll im Rahmen der vorliegenden Erfindung ein Material verstanden werden, aus dem Werkstücke bestehen. Der erfindungsgemäße Werkstoffverbund besteht daher mindestens aus den erfindungsgemäß genannten keramischen Materialien.

Unter den keramischen Materialien gemäß der vorliegenden Erfindung sollen oxidische keramische Materialien verstanden werden, oder keramische Materialien, die zum überwiegenden Anteil oxidische keramische Materialen aufweisen, die im fertigen erfindungsgemäßen Bauteil die Bereiche mit den unterschiedlichen elektrischen Eigenschaften bilden.

Derartige oxidische keramische Materialien halten in der Regel keine so hohen thermischen Belastungen aus, wie nichtoxidische keramische Materialien, aber sie haben den Vorteil, dass sie für lithografische Formgebungsverfahren die ausreichende Transparenz aufweisen.

Hinzu kommt, dass insbesondere elektrisch leitfähige Titansuboxide als keramische Materialien im Vergleich zu elektrisch leitfähigen nichtoxidischen keramischen

Materialien, die Möglichkeit aufweisen, dass sie als stabile, elektrisch isolierende Oxidvariante TiO₂ eingesetzt werden können und dann durch Überführung des TiO₂ in eine TiOₓ-Variante zu einem Material mit elektrischer Leitfähigkeit transformiert werden. Durch diese Transformation wird es möglich, dass für Licht sichtbarer Wellenlänge transparente TiO₂-Formteile mittels lithografischer Verfahren, wie im additiven Bauprozess mittels VPP-Verfahren, herzustellen, was mit den dunklen, intransparenten Titansuboxiden sowie mit den nichtoxidischen keramischen Leitern nicht möglich wäre.

Die erfindungsgemäßen Bereiche der hinsichtlich ihrer elektrisch Eigenschaften unterschiedlichen keramischen Materialien sind erfindungsgemäß stoffschlüssig und/oder formschlüssig und/oder kraftschlüssig miteinander verbunden, aber in jedem Fall noch als getrennte Bereiche innerhalb der erfindungsgemäßen Bauteile erkennbar und nachweisbar.

Bezüglich der unterschiedlichen elektrischen Eigenschaften der mindestens zwei verschiedenen Bereiche im erfindungsgemäßen Bauteil sollen im Rahmen der vorliegenden Erfindung alle Bereiche mit einer vernachlässigbaren, sehr geringen elektrischen Leitfähigkeit der Materialien als Bereiche mit elektrisch isolierenden Eigenschaften gekennzeichnet sein. Die vernachlässigbare, sehr geringe elektrische Leitfähigkeit ist für den Fachmann ein bekannter, materialbezogener Grenzwert.

In jedem Fall weisen die erfindungsgemäßen Bereiche mit unterschiedlichen elektrischen Eigenschaften im erfindungsgemäßen Bauteil so deutliche unterschiedliche elektrische Leitfähigkeiten auf, dass dies für den Fachmann klar erkennbar und eindeutig ist.

Weiter ist zur elektrischen Leitfähigkeit im Rahmen der vorliegenden Erfindung zu sagen, dass die elektrische Leitfähigkeit nur durch Elektronenleitung und den dazu befähigten Materialien realisiert wird.

Dies ist erfindungsgemäß auch deshalb von Bedeutung, weil keramische Materialien, die mittels freier Elektronen zur Elektronenleitfähigkeit bei niedrigen Temperaturen, insbesondere bei Raumtemperatur befähigt sind, meist dunkel oder metallisch glänzend, und in jedem Falle nichttransparent sind. Weiße, transparente keramische Materialien, die zur Elektronenleitung bei niedrigen Temperaturen, insbesondere bei Raumtemperatur befähigt sind, sind nicht bekannt.

Unter den niedrigen Temperaturen für die Elektronenleitfähigkeit sollen Temperaturen zwischen + 500 °C bis - 500 °C, vorteilhafterweise zwischen + 100 °C bis - 100 °C, verstanden werden.

Unter der erfindungsgemäßen Transparenz der eingesetzten keramischen Materialien soll eine Transluszenz bis Transparenz verstanden werden, bei der die nach dem Stand der Technik bekannten lithografischen Verfahren anwendbar sind.

Mit der vorliegenden Erfindung liegen Bauteile aus einem keramischen Werkstoffverbund vor, der aus Sinterkörpern besteht. Alle erfindungsgemäßen notwendigen und optionalen Bestandteile der erfindungsgemäßen Bauteile sind auch Bestandteil eines Sinterkörpers, das heißt, sie sind gemeinsam gesintert worden. Die erfindungsgemäßen Sinterkörper weisen mindestens gleichzeitig zwei oder mehr Bereiche auf, die mindestens aus einem keramischen Material mit elektrisch leitenden Eigenschaften und aus einem keramischen Material mit elektrisch isolierenden Eigenschaften bestehen.

Die mindestens zwei Bereiche aus den keramischen Materialien mit elektrisch leitenden und elektrisch isolierenden Eigenschaften können dabei in allen Raumrichtungen zueinander angeordnet sein, beispielsweise über-, neben- und/oder miteinander verbunden. Durch die Anordnung der Bereiche kann auch eine gradierte Struktur im erfindungsgemäßen Bauteil realisiert werden, wobei die Diffusion der Materialien ineinander in erster Linie an ihrem Interface oder an ihren Grenzflächen zueinander erfolgt. Die Diffusion der Materialien ineinander kann während der Sinterung gesteuert werden.

Ebenfalls insbesondere wird es mit der erfindungsgemäßen Lösung erstmals möglich, Formkörper mit mindestens zwei Bereichen aus unterschiedlichen Materialien aufzubauen und über die erfindungsgemäße Co-Sinterung zu Sinterkörpern zu verarbeiten, die danach gleichzeitig mindestens Bereiche aus einem keramischen Material mit elektrisch leitenden Eigenschaften und Bereiche aus einem keramischen Material mit elektrisch isolierenden Eigenschaften aufweisen.

Insbesondere wird es durch die erfindungsgemäße Lösung erstmals möglich, gemäß der erfindungsgemäßen Verfahrensvariante A beispielsweise auf einer Mehrkomponenten-VPP-Anlage Formkörper herzustellen, die nach der Sinterung als Sinterkörper gleichzeitig mindestens zwei oder mehr Bereiche aus mindestens einem keramischen Material mit elektrisch leitenden Eigenschaften und Bereiche aus mindestens einem keramischen Material mit elektrisch isolierenden Eigenschaften aufweisen, wobei zur Realisierung der Bereiche aus einem keramischen Material mit elektrisch leitenden Eigenschaften ein Ausgangspulver mit elektrisch nicht leitenden, also isolierenden Eigenschaften eingesetzt werden kann, welches die für den Einsatz in einer VPP-Anlage notwendigen transluzenten Eigenschaften aufweist (Verfahrensvariante A). Bei der Sinterung wird dann das keramische Material mit den transluzenten und den anfänglich elektrisch isolierenden Eigenschaften in ein keramisches Material mit elektrisch leitenden Eigenschaften transformiert.

Als keramische Materialien mit elektrisch leitenden Eigenschaften können ein oder mehrere Titansuboxide TiOₓ mit 0 < x < 2 vorhanden sein, und als keramisches Material mit elektrisch isolierenden Eigenschaften kann TiO₂, ZrO₂, Y₂O₃ und/oder Cordierit (Mg₂Al₄SiₛO₁₈) vorhanden sein. Dabei können auch Mischungen von keramischen Materialien mit elektrisch isolierenden Eigenschaften vorhanden sein, wie beispielsweise ZrO₂ mit Y₂O₃, wobei aber ausgeschlossen ist, dass irgendeines der keramischen Materialien mit elektrisch isolierenden Eigenschaften mit TiO₂ gemischt ist.

Mit dem Mehrkomponenten-WP-Verfahren können alle Materialien zu einem Formkörper gemeinsam verarbeitet und dann in einem gemeinsamen Sinterregime zu dem erfindungsgemäßen Bauteil verarbeitet werden (Verfahrensvariante A).

Neben dem Kriterium der Auswahl der keramischen Materialien hinsichtlich ihrer elektrisch leitenden oder isolierenden Eigenschaften ist es weiterhin von Bedeutung, dass die keramischen Materialien auch vergleichbare Ausdehnungskoeffizienten für die Sinterung aufweisen. Dies gilt insbesondere für das keramische Material mit elektrisch isolierenden Eigenschaften, da dessen Ausdehnungskoeffizient vergleichbar mit dem der eingesetzten Titansuboxid-Pulver als keramisches Material mit elektrisch leitenden Eigenschaften sein sollte.

Besonders wichtig ist diese Auswahl hinsichtlich der Ausdehnungskoeffizienten, wenn als Ausgangspulver für das keramische Material mit elektrisch leitenden Eigenschaften eine Ti-Verbindung mit elektrisch isolierenden Eigenschaften in Form von Titandioxidpulver (TiO₂) in den Mineralphasen Rutil und/oder Anatas eingesetzt wird und dieses Material in der während der erfindungsgemäß durchzuführenden Sinterung erfolgenden Transformation in die Ti-Verbindung mit elektrisch leitenden Eigenschaften in Form von Titansuboxiden TiOₓ mit 0 < x < 2 umgewandelt wird.

Weiter liegen die Bereiche, die mindestens aus einem keramischen Material mit elektrisch leitenden Eigenschaften, und mindestens aus einem keramischen Material mit elektrisch isolierenden Eigenschaften, bestehen, gemäß der vorliegenden Erfindung mindestens stoffschlüssig und/oder formschlüssig und/oder kraftschlüssig miteinander verbunden vor.

Dabei ist es erfindungsgemäß auch wichtig, dass die mindestens zwei Bereiche des Sinterkörpers aus keramischen Materialien mit den unterschiedlichen elektrischen Eigenschaften in mindestens einer Verbundart, also stoffschlüssig, formschlüssig und/oder kraftschlüssig, miteinander verbunden sind, so dass die mindestens zwei Bereiche des Bauteils nicht trennbar voneinander sind.

Beispielsweise wird ein Bereich, der sich an der Oberfläche befindet, eher stoffschlüssig mit dem anderen Bereich verbunden sein, damit keine mechanische Trennung der beiden Bereiche erfolgen kann. In einem solchen Fall kann auch eine teilweise Diffusion der Materialien ineinander zu einer stoffschlüssigen Verbindung führen.

Jedoch kann ein Bereich im Inneren des anderen Bereiches durchaus auch nur formschlüssig oder kraftschlüssig mit dem ihn umgebenden Bereich verbunden sein, da er trotzdem nicht seine Lage und Position innerhalb des Bauteils verlieren oder verändern kann.

Hinzu kommt, dass die erfindungsgemäßen Bauteile eine komplexe Bauteilgeometrie aufweisen.

Dies wird insbesondere durch die Formgebung der Bauteile über additive Verfahren, wie das Vat Photopolymerization (VPP)-Verfahren, erreicht.

Mit diesem oder anderen Formgebungsverfahren können beispielsweise auch die Bereiche aus einem keramischen Material mit elektrisch leitenden Eigenschaften als Leiterbahnen oder als Elektroden in, an oder auf den Bereichen aus dem keramischen Material mit elektrisch isolierenden Eigenschaften angeordnet werden.

Während der Sinterung der entbinderten Formkörper werden diese zu Sinterkörpern mit den finalen Bauteileigenschaften verdichtet. Damit weisen die erfindungsgemäßen Bauteile vorteilhafterweise in den Bereichen der unterschiedlichen keramischen Materialien jeweils eine Dichte von mindestens 70 % der theoretischen Dichte des jeweiligen keramischen Materials auf.

Da einige der keramischen Materialien, wie beispielsweise TiOₓ mit 0 < x < 2 nach der Sinterung noch eine Restporosität aufweisen können, kann diese durch eine heißisostatische Nachverdichtung in Schutzgasatmosphäre weiter reduziert oder beseitigt werden.

Bei dem erfindungsgemäßen Verfahren zur Herstellung von Bauteilen aus einem keramischen Werkstoffverbund werden
- gemäß Verfahrensvariante A aus mindestens zwei verschiedenen pulverförmigen keramischen Materialien mit elektrisch isolierenden Eigenschaften, wobei mindestens eines dieser pulverförmigen keramischen Materialien zu einer Transformation während der Sinterung in ein keramisches Material mit elektrisch leitenden Eigenschaften befähigt ist, mittels additiver lithografischer oder nichtlithografischer Formgebungsverfahren Formkörper hergestellt und nachfolgend gesintert, wobei während des Sinterprozesses der entbinderten Formkörper mindestens ein Wechsel der Sinteratmosphäre durchgeführt wird,
   oder
- gemäß Verfahrensvariante B aus mindestens einem pulverförmigen keramischen Material mit elektrisch isolierenden Eigenschaften und aus mindestens einem pulverförmigen keramischen Material mit elektrisch leitenden Eigenschaften mittels nichtlithografischer Formgebungsverfahren Formkörper hergestellt werden, die nachfolgend in einer nicht-oxidierenden Sinteratmosphäre gesintert werden.

Als pulverförmige keramische Materialien mit elektrisch leitenden Eigenschaften werden vorteilhafterweise ein oder mehrere Titansuboxide TiOₓ mit 0 < x < 2 eingesetzt, und als pulverförmige keramische Materialien mit elektrisch isolierenden Eigenschaften TiO₂, ZrO₂, Y₂O₃ und/oder Cordierit (Mg₂Al₄Si₅O₁₈) einzeln oder keramische Materialien mit elektrisch isolierenden Eigenschaften in Mischungen eingesetzt, wobei jede Mischung von keramischen Materialien mit elektrisch isolierenden Eigenschaften mit TiO₂ erfindungsgemäß ausgeschlossen ist.

Die Herstellung von erfindungsgemäßen Sinterkörpern gemäß Verfahrensvariante A hat den wichtigen Vorteil, dass Ausgangsstoffe eingesetzt werden können, die mittels additiver lithografischer Formgebungsverfahren zu Formkörpern verarbeitet werden können, sofern sie mindestens transluzent sind. Damit werden für die Formgebung derartiger pulverförmiger keramischer Materialien vollkommen neue und für diese Materialien bisher noch nicht einsetzbare additive Formgebungsverfahren anwendbar. Dabei ist es neben der Transluzenz der jeweiligen keramischen Ausgangsmaterialien erfindungsgemäß notwendig, dass mindestens eines der Ausgangsmaterialien während der Sinterung hinsichtlich seiner elektrischen Eigenschaften transformierbar ist, damit der erfindungsgemäße Sinterkörper mindestens zwei Bereiche aus keramischen Materialien aufweist, von denen ein Bereich elektrisch leitende Eigenschaften und ein Bereich elektrisch isolierende Eigenschaften aufweist.

Ebenfalls ist es aber zur Herstellung von erfindungsgemäßen Sinterkörpern gemäß Verfahrensvariante A auch möglich, dass die Ausgangsstoffe mittels bekannter nichtlithografischer Formgebungsverfahren, wie Foliengießen, Spritzgießen, Pressen, zu einem Formkörper verarbeitet und gesintert werden können. In diesem Fall müssen die Ausgangsmaterialien nicht transluzent sein, aber mindestens einer der Ausgangsmaterialien muss während der Sinterung hinsichtlich seiner elektrischen Eigenschaften transformierbar sein, damit der erfindungsgemäße Sinterkörper mindestens zwei Bereiche aus keramischen Materialien aufweist, von denen ein Bereich elektrisch leitende Eigenschaften und ein Bereich elektrisch isolierende Eigenschaften aufweist.

Jedoch unabhängig davon, ob die Formgebung der keramischen Ausgangsmaterialien mittels additiver lithografischer Verfahren oder nichtlithografischer Verfahren realisiert worden ist, muss die nachfolgende Sinterung derart erfolgen, dass das mindestens eine keramische Ausgangsmaterial, welches zur Transformation hinsichtlich seiner elektrischen Eigenschaften befähigt ist, mindestens teilweise transformiert wird. Dazu ist während der Sinterung in jedem Falle in Atmosphärenwechsel der Sinteratmosphäre notwendig.

Im Falle der Herstellung von Formkörpern mittels additiver lithografischer Verfahren gemäß Verfahrensvariante A werden aus den Ausgangspulvern der mindestens zwei keramischen Materialien der erfindungsgemäßen Bauteile Suspensionen mit üblichen Materialien für additive lithografische Verfahren, wie beispielsweise photoreaktive Monomere als Suspendiermittel, Plastifizierer, Entschäumer, Oberflächenadditive, hergestellt, mit Hilfe derer die Formgebung der erfindungsgemäßen Bauteile mittels VPP-Verfahrens realisiert werden kann.

Die so hergestellten Formkörper bestehen nach der Formgebung aus mindestens zwei unterschiedlichen keramischen Materialien, die beide elektrisch nichtleitende, also elektrisch isolierende, Eigenschaften aufweisen.

Jedoch muss mindestens eines dieser keramischen Materialien zu einer Transformation während der Sinterung in ein keramisches Material mit elektrisch leitenden Eigenschaften befähigt sein. Dies kann beispielsweise TiO₂ sein, welches unter bestimmten Sinterbedingungen zu einem oder mehreren Titansuboxiden TiOₓ mit 0 < x < 2 transformiert werden kann.

Nach der Formgebung mittels additiver lithografischer Verfahren gemäß Verfahrensvariante A werden die Formkörper einer thermischen Entbinderung unterzogen und unmittelbar anschließend oder später nachfolgend gesintert. Der Sinterprozess der entbinderten Formkörper muss dabei mindestens teilweise zu einer Transformation der keramischen Materialien führen, die in transformierter Form elektrisch leitfähige Eigenschaften aufweisen. Eine solche Transformation liegt beispielsweise vor, wenn TiO₂ unter reduzierenden Bedingungen zu mindestens einem seiner Suboxide transformiert wird. TiO₂ weist elektrisch isolierende Eigenschaften auf, seine Suboxide weisen elektrisch leitende Eigenschaften auf.

Der Sinterprozess für entbinderte Formkörper gemäß Verfahrensvariante A kann dabei derart realisiert werden, dass die entbinderten Formkörper auf eine maximale

Sintertemperatur aufgeheizt, dort gehalten und dann abgekühlt werden. Während des gesamten Sinterverfahrens muss mindestens ein Atmosphärenwechsel der Sinteratmosphäre innerhalb der Sintervorrichtung mit den entbinderten Formkörpern durchgeführt werden. Vorteilhafterweise wird während des Aufheizens der Formkörper und während eines Teils der Haltezeit bei der maximalen Sintertemperatur die Sinterung in reduzierender Gasatmosphäre durchgeführt. Danach kann ein Atmosphärenwechsel in ein Vakuum oder in eine inerte Gasatmosphäre während der verbleibenden Haltezeit realisiert werden, und während der Abkühlung kann wiederum ein Atmosphärenwechsel in eine reduzierende Gasatmosphäre durchgeführt werden. Ein solcher Atmosphärenwechsel kann beispielsweise aber auch von Luftatmosphäre zu Vakuum, von Vakuum zu Inertgasatmosphäre oder von Vakuum zu reduzierender Atmosphäre durchgeführt werden.

Durch den Atmosphärenwechsel von oxidierend oder inert auf reduzierend wird das TiO₂ mindestens teilweise in eine Suboxidvariante umgewandelt, wodurch es seine elektrische Leitfähigkeit erhält und seine Farbe von weiß auf blau-schwarz-braun ändert.

Bei der Transformation von TiO₂ zu einer Suboxidvariante, wird dem Kristall-Gitter Sauerstoff entzogen. Dadurch werden Elektronen für die Elektronenleitung frei. Durch den Atmosphärenwechsel im erfindungsgemäßen Verfahren gemäß der Verfahrensvariante A muss während der Sinterung eine Atmosphäre eingestellt werden, die den Entzug von Sauerstoff aus dem Kristallgitter ermöglicht oder realisiert. Dies kann am einfachsten mit einer reduzierenden Atmosphäre realisiert werden.

Im Rahmen der vorliegenden Erfindung soll unter dem Begriff Sinteratmosphäre auch ein Vakuum verstanden werden, ebenso, wie erfindungsgemäß ein Atmosphärenwechsel von oder zu einem Vakuum realisiert werden kann. Ein Vakuum im Rahmen der vorliegenden Erfindung weist maximale Gasdrücke von < 100 Pa bis 0,1 Pa, vorteilhafterweise bis ≤ 1 Pa oder vorteilhafterweise bis ≤ 0,01 Pa auf.

Mit dem mindestens einen Atmosphärenwechsel in der Sintervorrichtung für die entbinderten Formkörper kann die Transformation von mindestens einem der keramischen Materialien initiiert und gesteuert werden.

In jedem Fall können durch die Sinterung mit dem mindestens einen Atmosphärenwechsel der Sinteratmosphäre zur Transformation mindestens eines der keramischen Materialien hinsichtlich seiner elektrischen Eigenschaften auch unterschiedliche Grade der Transformation in den mehreren Bereichen des Sinterkörpers realisiert werden, ebenso wie eine Transformation des anderen keramischen Materials.

Grundsätzlich muss aber das erfindungsgemäße Bauteil mindestens zwei Bereiche aus keramischen Materialien mit elektrisch leitenden und elektrisch isolierenden Eigenschaften aufweisen.

Ebenso kann durch die Transformation eines der keramischen Materialien hinsichtlich seiner elektrischen Eigenschaften auch nur in einem oberflächennahen Bereich des Sinterkörpers realisiert sein und der Kern kann untransformiert sein. Dies kann insbesondere dann vorliegen, wenn als alleiniger Ausgangsstoff gemäß der Verfahrensvariante A TiO₂ eingesetzt wird und im Laufe des Verfahrens Anteile des TiO₂ in TiOₓ transformiert werden. Somit liegt dann ein erfindungsgemäßes Bauteil mit Bereichen aus TiO₂ als keramisches Material mit elektrisch isolierenden Eigenschaften und mit Bereichen aus TiOₓ als keramisches Material mit elektrisch leitenden Eigenschaften vor.

Der sehr große Vorteil dieser erfindungsgemäßen Verfahrensführung gemäß Verfahrensvariante A besteht darin, dass als Ausgangsstoffe für die Bauteilherstellung gut bekannte und leicht verfügbare Materialien, wie TiO₂ und ZrO₂ eingesetzt werden können, die beide zwar die Auswahlkriterien für den Einsatz von additiven lithografischen Formgebungsverfahren erfüllen, da beide Materialien transluzent sind, aber beide auch elektrisch isolierende Eigenschaften aufweisen. Während der nachfolgenden Sinterung wird dann erfindungsgemäß die Verfahrensführung des Sinterprozesses so gestaltet, dass eines der beiden Materialien mindestens teilweise transformiert wird in ein Material, welches elektrisch leitende Eigenschaften aufweist. Die Verfahrensführung gemäß Verfahrensvariante A während der Sinterung wird über mindestens einen Atmosphärenwechsel in der Sintervorrichtung realisiert, wobei der Atmosphärenwechsel mindestens so erfolgen muss, dass die Transformation des mindestens einen Materials, welches die Transformation hinsichtlich seiner elektrisch leitenden Eigenschaften realisiert, initiiert und mindestens teilweise realisiert wird. Welche Atmosphären in welchem Stadium der Sinterung diese Transformation auslösen und realisieren, hängt von dem jeweiligen Material ab.

Beim Einsatz von TiO₂ und ZrO₂ als Ausgangstoffe für die Verfahrensführung gemäß Verfahrensvariante A wird die Transformation des TiO₂ durch eine mindestens teilweise unter reduzierenden Bedingungen stattfindende Sinterung des TiO₂ realisiert, welches unter den reduzierenden Bedingungen zu seinen Suboxiden TiOₓ mit 0< x <2 transformiert wird. Diese Ti-Suboxide weisen elektrisch leitende Eigenschaften auf.

Das andere Material, wie hier ZrO₂, behält unter den Sinterbedingungen seine elektrisch isolierenden Eigenschaften bei, so dass nach dem Co-Sinterprozess erfindungsgemäße Bauteile gemäß diesem Beispiel mit Bereichen aus TiOₓ mit 0< x <2 mit elektrisch leitenden Eigenschaften und aus ZrO₂ mit elektrisch isolierenden Eigenschaften gleichzeitig vorliegen.

Als zusätzlicher Vorteil des erfindungsgemäßen Verfahrens können mindestens die Bereiche aus keramischen Materialien, die während der Sinterung nicht transformiert worden sind, ihre vorteilhaften Eigenschaften unverändert beibehalten. Dies kann sowohl das untransformierte TiO₂ als auch das ZrO₂ betreffen, welche beispielsweise auch eine hohe Festigkeit neben den elektrisch isolierenden Eigenschaften aufweisen. Speziell ZrO₂ weist auch nach der Sinterung noch einen hohen elektrischen Widerstand und/oder eine weiße oder zumindest helle Färbung auf.

Auch die während der Sinterung transformierten Materialien, wie beispielsweise TiOₓ mit 0 < x < 2, weisen in den erfindungsgemäßen Bauteilen sehr vorteilhafte Eigenschaften auf. Insbesondere sind die nichtstöchiometrischen Titanoxide der allgemeinen Formel TiₙO₂ₙ₋₁ mit 4≤n<10, die auch als Magnéli-Phasen bekannt sind, aufgrund ihrer elektrisch leitenden, aber auch thermoelektrischen, Eigenschaften für die erfindungsgemäßen Bauteile von besonderem Interesse. Besonders vorteilhaft ist die Transformation von TiO₂ in nichtstöchiometrische Titanoxide mit mindestens einem anteiligen Gehalt an Ti₄O₇. In den erfindungsgemäßen Bauteilen können dabei gleichzeitig unterschiedliche Suboxide des Ti in unterschiedlichen Mengen und Bereichen vorhanden sein.

Es ist aber erfindungsgemäß gemäß Verfahrensvariante B auch möglich, Formkörper aus keramischen Materialien in Pulverform mit nichtlithografischen Formgebungsverfahren herzustellen, die dann auch aus mindestens einem pulverförmigen keramischen Material mit elektrisch isolierenden Eigenschaften und aus mindestens einem pulverförmigen keramischen Material mit elektrisch leitenden Eigenschaften bestehen müssen.

Für die Herstellung solcher Formkörper gemäß Verfahrensvariante B können vorteilhafterweise als pulverförmige keramische Materialien mit elektrisch leitenden Eigenschaften ein oder mehrere Titansuboxide TiOₓ mit 0 < x < 2 eingesetzt werden, und als pulverförmige keramische Materialien mit elektrisch isolierenden Eigenschaften ZrO₂, Y₂O₃ und/oder Cordierit (Mg₂Al₄Si₅O₁₈), einzeln oder in Mischungen, eingesetzt werden.

Bei der Herstellung der Formkörper gemäß Verfahrensvariante B erfolgt die Sinterung unter nicht-oxidierenden Bedingungen. Die eingesetzten pulverförmigen keramischen Materialien müssen einerseits während der Sinterung nicht zu keramischen Materialien mit elektrisch leitfähigen Eigenschaften transformieren, da bereits derartige Materialien als Ausgangsstoffe vorhanden gewesen sind. Andererseits ist bei der Herstellung der Sinterkörper gemäß Verfahrensvariante B zu beachten, dass die eingesetzten pulverförmigen keramischen Materialien mit elektrisch leitenden Eigenschaften während der Sinterung nicht ihre elektrisch leitenden Eigenschaften verlieren. Es ist daher die Verfahrensführung gemäß Verfahrensvariante B so zu wählen, dass keine oder zumindest keine vollständige Transformation des keramischen Materials mit elektrisch leitenden Eigenschaften während der Sinterung in ein Material ohne elektrisch leitende Eigenschaften realisiert wird.

Daher muss beispielsweise im Falle des Einsatzes von Titansuboxiden TiOₓ mit 0 < x < 2 als keramisches Material mit elektrisch leitenden Eigenschaften als Ausgangsstoff für die Herstellung und Sinterung entbinderter Formkörper gemäß Verfahrensvariante B einerseits eine nicht-oxidierende Sinteratmosphäre realisiert werden, damit keine vollständige Oxidation der Titansuboxide zu TiO₂ erfolgen kann, da TiO₂ bekanntermaßen elektrisch isolierende Eigenschaften aufweist.

Ebenso kann im genannten Falle des Einsatzes von Titansuboxiden TiOx mit 0 < x < 2 als keramisches Material mit elektrisch leitenden Eigenschaften als Ausgangsstoff für die Herstellung und Sinterung entbinderter Formkörper gemäß Verfahrensvariante B nicht TiO₂ als keramisches Material mit elektrisch isolierenden Eigenschaften als Ausgangsstoff eingesetzt werden, da dieses während der Sinterung unter nichtoxidierenden Bedingungen ebenfalls zu Titansuboxiden TiOₓ mit 0 < x < 2 transformiert werden würde und dann im Sinterkörper nur noch Bereiche aus keramischen Materialien mit elektrisch leitenden Eigenschaften vorhanden wären.

Bei der Herstellung des Formkörpers gemäß Verfahrensvariante B ist noch zu beachten, dass nach der pulvertechnologischen nichtlithografischen Formgebung ebenfalls ein Entbinderungsprozess angeschlossen wird, in welchem der Formkörper von organischen Bindemitteln und Hilfsstoffen befreit wird. Der dabei entstehende binderfreie Körper wird als entbinderter Formkörper bezeichnet. Dieser Entbinderungsprozess kann Teil des Sinterprozesses sein, oder an den Entbinderungsprozess schließt die Co-Sinterung der mindestens zwei Materialen an.

Die Sinterung der entbinderten Formkörper gemäß Verfahrensvariante B erfolgt erfindungsgemäß durch Aufheizen der entbinderten Formkörper bis zu einer maximalen Sintertemperatur und Halten bei dieser Temperatur und Abkühlung, wobei während der gesamten Sinterung die Sinteratmosphäre im Wesentlichen keinen Sauerstoff aufweisen darf, damit keine Oxidation der keramischen Materialien mit elektrisch leitenden Eigenschaften zu keramischen Materialien mit elektrisch isolierenden Eigenschaften erfolgen kann. Daher sollte die Sinterung von entbinderten Formkörpern gemäß Verfahrensvariante B vorteilhafterweise unter reduzierenden Bedingungen in einer reduzierenden Gasatmosphäre durchgeführt werden.

Als reduzierende Gasatmosphäre können vorteilhafterweise Wasserstoff-, Stickstoff-Wasserstoff, Argon-Wasserstoff- oder Kohlenmonoxid-Atmosphären eingesetzt werden.

Für die Sinterung der entbinderten Formkörper werden Sintertemperaturen von mindestens 1100 °C realisiert.

Während der Sinterung können Haltezeiten bei verschiedenen Temperaturen realisiert werden, insbesondere bei der maximalen Sintertemperatur. Die Haltezeiten können dabei zwischen 30 min und mehreren Stunden, wie 10 oder 20 h, betragen und sind materialabhängig und abhängig von der gewünschten Dichte der Sinterkörper. Ebenso können Haltezeiten im Sinterprozess realisiert werden, um die Atmosphärenwechsel durchzuführen. Vorteilhafterweise wird nach 5 bis 50 %, vorteilhafterweise nach 20 bis 40 %, noch vorteilhafterweise nach 20 bis 25 %, der Haltezeit bei der maximalen Sintertemperatur ein Atmosphärenwechsel durchgeführt.

Zur Sinterung der entbinderten Formkörper gemäß Verfahrensvariante B kann als nicht-oxidierende Gasatmosphäre eine inerte oder reduzierende Gasatmosphäre, eine Stickstoff-Wasserstoff(Formiergas)-, eine Argon-Wasserstoff(Varigon)-, Wasserstoff-, Stickstoff-, Argon- oder Kohlenmonoxid-Atmosphäre eingesetzt werden.

Im Falle der Sinterung der entbinderten Formkörper gemäß Verfahrensvariante A kann durch eine vorteilhafte Verfahrensführung der Sinterung die Verdichtung der keramischen Materialien beim Aufheizen und während eines Teils der Haltezeit bei der maximalen Sintertemperatur unter reduzierender Gasatmosphäre erfolgen. Dabei kann der entstehende Wasserdampf oder das Kohlendioxid durch die Poren des Formkörpers entweichen. Nachfolgend erfolgt ein Atmosphärenwechsel in ein Vakuum oder in eine inerte Gasatmosphäre, wobei ein Verdichten des Formkörpers während des Restes der Haltezeit bei der maximalen Sintertemperatur realisiert wird. Um das Verdichten abzuschließen wird ein erneuter Atmosphärenwechsel der Sinteratmosphäre wiederum zu einer reduzierenden Gasatmosphäre während der Abkühlung realisiert.

Vorteilhafterweise wird daher bei der Sinterung der entbinderten Formkörpern gemäß Verfahrensvariante A nach 5 bis 50 %, vorteilhafterweise nach 20 bis 40 %, noch vorteilhafterweise nach 20 bis 25 %, der Haltezeit bei der maximalen Sintertemperatur unter reduzierenden Gasatmosphäre ein Atmosphärenwechsel zu einem Vakuum oder zu einer inerten Gasatmosphäre durchgeführt.

Vorteilhafte Haltezeiten für die Sinterung der entbinderten Formkörper gemäß Verfahrensvariante A unter Vakuum, reduzierender oder inerter Gasatmosphäre sind 1 bis 20 h.

Die Sinterung der entbinderten Formkörper gemäß Verfahrensvariante A muss auf jeden Fall so lange durchgeführt werden, bis von einem keramischen Material mit elektrisch isolierenden Eigenschaften mindestens 5 Vol.-% bis 100 Vol.-%, vorteilhafterweise mindestens 20 - 100 Vol.-%, noch vorteilhafterweise 80 - 100 Vol.-% zu einem keramischen Material mit elektrisch leitenden Eigenschaften transformiert worden ist.

Die Haltezeiten variieren auch vom Volumen, von der Wandstärke, von der Partikelgröße des keramischen Materials, von der Anzahl an entbinderten Formkörpern und der Größe der Vorrichtungen im Sinterofen, in denen die Sinterung erfolgt.

Die Haltezeiten beim Aufheizen und bei maximaler Sintertemperatur sind dabei maßgeblich von der Wandstärke der zu reduzierenden Bauteilkomponenten abhängig. Je größer die Wandstärken, umso länger müssen die Haltezeiten in reduzierender Atmosphäre gewählt werden, um eine vollständige Reduktion im ganzen Volumen zu erreichen.

Eine vorteilhafte Ausgestaltung des Sinterprozesses der entbinderten Formkörper gemäß beider Verfahrensvarianten A und B ist, wenn das Aufheizen der Form- und Sinterkörper unter strömender Gasatmosphäre durchgeführt wird. Die Haltezeiten und die Abkühlung sollten vorteilhafterweise unter ruhender Gasatmosphäre realisiert werden.

Der Atmosphärenwechsel im Falle der Sinterung von entbinderten Formkörpern gemäß Verfahrensvariante A kann durch Einstellung eines Vakuums in dem Sinterraum, sofern es nicht bereits vorhanden ist, durch Evakuierung einer möglicherweise vorhandenen inerten Gasatmosphäre und anschließendes Einlassen des Gases zur Realisierung einer reduzierenden Gasatmosphäre erfolgen. Es muss in jedem Fall verhindert werden, dass Sauerstoff in den Sinterraum gelangt.

Es ist auch möglich, nach der Verdichtung der Formkörper und der vollständigen Transformation eines keramischen Materials mit elektrisch isolierenden Eigenschaften in ein keramisches Material mit elektrisch leitenden Eigenschaften gemäß Verfahrensvariante A und während der Abkühlung im Sinterraum wieder ein Vakuum oder eine inerte Gasatmosphäre zu realisieren.

Besonders vorteilhaft ist die Herstellung von erfindungsgemäßen Bauteilen gemäß der Verfahrensvariante A unter Verwendung von TiO₂ als keramisches Material in nicht reduzierter Form, also mit elektrisch isolierenden Eigenschaften mit additiven lithografischen Formgebungsverfahren, wie dem VPP-Verfahren. Da all die nichtstöchiometrischen TiOₓ-Verbindungen mit 0< x <2 infolge ihrer dunklen Färbung für die Anwendung in lithografischen Formgebungsverfahren nicht angewandt werden können, kann erfindungsgemäß als Ausgangpulver TiO₂ mit beispielsweise ZrO₂ als keramischem Material mit ebenfalls elektrisch isolierenden Eigenschaften über den Multi-Material-VPP-Prozess kombiniert werden.

Für den VPP-Prozess werden die Ausgangspulver in einem Reaktivverdünner zusammen mit dem Dispergierhilfsmittel sowie einer Mischung aus verschiedenen Monomeren und einem Photoinitiator, der zu der für den VPP-Druckprozess verwendeten Wellenlänge passt, dispergiert. Zum Abgleich der Sinterschwindung beider keramischer Materialien zur Erreichung defektfreier Bauteile wird der Feststoffgehalt der hergestellten Suspensionen so abgestimmt, dass beide Keramikkomponenten denselben Schwindungsbetrag in allen drei Raumrichtungen aufweisen. Zusätzlich muss darauf geachtet werden, dass die Suspensionen für eine optimale Verarbeitbarkeit über den VPP-Prozess scherverdünnende rheologische Eigenschaften bei einer relativ geringen dynamischen Viskosität (<30 Pas bei einer Scherrate von 10 s⁻¹) aufweisen. Die Feststoffgehalte der Suspensionen aus keramischen Pulvern mit Partikelgrößen zwischen 0,04 und 5 µm liegen dabei typischerweise zwischen 35 - 55 Vol.-%.

Der 2C-VPP (two component VPP) Prozess für zwei Materialsysteme ist eine Weiterentwicklung des zuvor beschriebenen VPP-Druckprozesses für Einzelmaterialien, der die Fertigung von Multimaterialbauteilen bestehend aus zwei Materialien ermöglicht. Der bandbasierte 2C-VPP Prozess enthält zwei parallel verlaufende und sich mit einer definierten Schergeschwindigkeit (0,1-500 1/s) bewegende transparente Folienbänder. Unter jedem der zwei Folienbänder befindet sich ein Videoprojektor mit einer Lichtquelle mit monochromatischem Licht, beispielsweise mit 405 nm Wellenlänge und mit einer einstellbaren Intensität. Durch den Videoprojektor werden der mittels eines DMD-Chips gezielt über eine Optik flächig und pixelbasiert Schichtbilder von unterhalb der zwei Folienbänder ortsaufgelöst projiziert. Durch den Projektor, dessen Optik und den Abstand zum Folienband wird die Auflösung und Größe der jeweils projizierten Pixels eingestellt. Auf den Folienbändern wird über ein Auftragssystem, welches in Kombination mit einer Rakel arbeiten kann, eine fotoreaktive Suspension aufgetragen, mit Schichtdicken im Bereich von 25 bis 500 µm. Dann wird auf Band 1 das Systems 1, beispielsweise aus einer TiO₂-Suspension, und auf Band 2 das System 2, beispielweise aus einer ZrO₂-Suspension, aufgetragen. Zwischen den zwei Bändern befindet sich die Bauplattform, die eine um mindestens 180 ° in xy-Richtung schwenkbar gelagerte z-Achse aufweist. Diese Bauplattform ist parallel zu den zwei Folienbändern ausgerichtet. Während des Prozesses zum Aufbau eines Zwei-Komponenten-Bauteils taucht die Bauplattform zunächst in die aufgestrichene Suspension des Systems 1 auf Band 1 ein, der Abstand zwischen Bauplattform und Folienband ist einstellbar und realisiert die Schichtdicke einer Schicht im Bauteil. Nach dem Eintauchen erfolgt die ortsaufgelöste Belichtung des Systems 1 durch Projektor 1 und die belichteten Bereiche vernetzen und/oder polymerisieren durch Fotopolymerisation. Anschließend löst sich die Bauplattform inklusive der durch Belichtung verfestigten Schicht vom Folienband 1 ab und bewegt sich in z-Richtung nach oben. Zwischen den beiden Folienbändern befindet sich eine Reinigungsstation. Durch Drehung der Bauplattform um die z-Achse um +90 ° wird die Reinigungsstation angefahren. Durch Reinigungsmittel und Reinigungsschritte wird die verbleibende Suspension des Systems 1 entfernt. Anschließend rotiert die Bauplattform um die z-Achse um weitere +90 ° (jetzt um 180 ° zum Band 1 gedreht) und taucht mit der Bauplattform und der verfestigten sowie gereinigten Schicht des Systems 1 in die Suspension des Systems 2 auf Band 2 durch Absenken der Bauplattform ein. Der Abstand zwischen Bauplattform und Folienband 2 entspricht dabei wieder der Schichtdicke der herzustellenden Schicht des Systems 2. Anschließend erfolgt die ortsaufgelöste Belichtung des Systems 2 durch Projektor 2 wodurch die belichteten Bereiche durch Fotopolymerisation vernetzen und/oder polymerisieren. Anschließend hebt sich die Bauplattform in z-Richtung nach oben und löst sich inklusive verfestigter Bauteilbereiche der zweiten Schicht von Folienband 2 ab. Die Bauplattform wird dann erneut in Richtung Reinigungsstation gedreht, diesmal jedoch entgegengesetzt um -90 °. Es beginnt der Reinigungsschritt zum Entfernen überflüssiger nichtvernetzter Suspension des Systems 2. Anschließend rotiert die Bauplattform um die z-Achse erneut entgegengesetzt um -90 ° zur Ausgangsposition über Band 1 des Systems 1. Die Bauplattform taucht nun erneut auf Band 1 in das System 1, jedoch in z-Richtung um den Abstand einer Schichtdicke nach oben versetzt. Die beschriebenen Schritte werden solange wiederholt, bis das komplette Bauteil, d.h. die Anzahl der Schichten des in Schichten zerlegten Bauteils, erreicht ist.

Bauteile aus mehreren keramischen Materialien in verschiedenen Bereichen eines Bauteils sind im Hinblick auf ihre Eigenschaftskombinationen von elektrisch leitenden und elektrisch isolierenden bisher im Stand der Technik nicht bekannt. Ebenfalls nicht bekannt ist die Herstellung derartiger Bauteile in der Formgebung mittels lithografischer Formgebungsverfahren und durch eine Cosinterung des gesamten Bauteils in einem Sinterprozess.

Nachfolgend wird die Erfindung an mehreren Ausführungsbeispielen näher erläutert.

### Beispiel 1 gemäß Verfahrensvariante B

Aus 40 g Y₂O₃ und aus 40 g Ti₄O₇ werden jeweils unter Zusatz von 5,9 g H₂O (entionisiert) und 0,4 g Entschäumer (Foammaster F111) und 53,7 g Binder (Mowiol 20-98 als 13%ige Lösung), und 5,6 g Glycerin Schlicker hergestellt, aus denen je eine Folie mit den Abmessungen 600 x 600 mm mittels Folienguss hergestellt wird. Die beiden Folien werden übereinander zu einem Formkörper angeordnet.

Der Formkörper wird nachfolgend auf 500 °C unter Stickstoffatmosphäre aufgeheizt und dabei schonend entbindert. Unmittelbar nachfolgend an die Entbinderung erfolgt der Sinterschritt. Dazu wird die Stickstoffatmosphäre aus dem Sinterofen abgesaugt und das Aufheizen der entbinderten Formkörper unter Vakuum bis zur maximalen Sintertemperatur von 1400 °C realisiert und dort der Formköper für 4 h gehalten. Von besonderer Wichtigkeit ist bei diesem Sinterregime, dass während der gesamten Sinterung im Wesentlichen kein Sauerstoff in der Sinteratmosphäre vorhanden ist, damit keine Oxidation des Ti₄O₇ in TiO₂ erfolgen kann.

Nach der Abkühlung liegt ein erfindungsgemäßes Bauteil vor, welches auf einer Seite eine Y₂O₃-Schicht mit elektrisch isolierenden Eigenschaften und auf der anderen Seite eine Ti₄O₇-Schicht mit elektrisch leitenden Eigenschaften aufweist.

### Beispiel 2 gemäß Verfahrensvariante A

Die Fertigung eines keramischen Formkörper aus den Ausgangsmaterialien ZrO₂ und TiO₂ erfolgt additiv unter Verwendung eines badbasierten Photo-Polymerisations-Verfahrens (VPP).

Dafür werden zunächst zwei Suspension hergestellt.

Suspension 1 besteht aus 100 g Yttrium-teilstabilisiertem ZrO₂ (Tosoh, TZ 3Y-E,d50 = 0,2 µm, ca. 47 Vol.-% Anteil), 14,23 g einer Mischung aus fotoreaktiven Monomeren von unterschiedlicher Funktionalität (Photomer 2012, Laromer UA9089; Laromer PPTTA), 4,76 g eines plastifizierenden Fluids (PPG400), 1,9 g eines Dispergator (Disperbyk145) und 0,158 g eines Initiators (Omnirad 784).

Suspension 2 besteht aus 75 g TiO₂ (KRONOS, 1002, d50 = 0,4 µm ca. 43 Vol.-%), 20,3 g einer Mischung aus fotoreaktiven Monomeren von unterschiedlicher Funktionalität (Photomer 2012, Laromer UA9089; Laromer PPTTA), 6,8 g eines plastifizierenden Fluids (PPG400), 1,3 g eines Dispergators (Disperbyk145) und 0,245 g eines Initiators (Omnirad 784).

Die Aufbereitung/Dispergierung beider Suspensionen erfolgt mittels Planetenmischers (ARV-310CE, Thinky Corp.) schrittweise in drei Schritten für 5 min bei 2000 U/min. Zwischen den Schritten werden die Suspensionen mindestens 5 min im Wasserbad gekühlt und anschließend wird für 5 min mittels Ultraschallsonotrode zusätzlich Energie eingetragen, um weitere mögliche Agglomerate aufzuschließen.

Nach der Herstellung der Suspensionen erfolgt mittels VPP-Verfahrens die separate Fertigung einzelner Formkörper (diese sind Einzelteile eines größeren zusammengesetzten Bauteils) auf Basis der zwei Suspensionen mit den keramischen Materialien ZrO₂ und TiO₂. Der digital zerlegte Formkörper für jedes der beiden Materialien wird in dem VPP-Verfahren Schicht für Schicht in 25 µm Schichtdicke additiv aufgebaut und vernetzt in den gewünschten Bereichen. Nach dem Aufbau erfolgt die Reinigung der Formkörper mittels Reinigungslösung (dibasische Ester) und Druckluft, wobei die nicht vernetzte Suspension entfernt wird. Anschließend werden die einzelnen Formkörper der zwei Materialien nach Bauplan des gewünschten Bauteils zusammengesetzt und gemeinsam thermisch prozessiert, das heißt entbindert. Während der Entbinderung werden die in den Formköpern aus den Suspensionen noch vorhandenen organischen Komponenten unter Luftatmosphäre mit einer Heizrate von 6 K/h bis 600 °C ausgeheizt, wobei bei 200 °C, 400 °C und 600 °C jeweils eine Haltezeit von 10 h verwendet wurde.

Der entbinderte Formkörper wird nachfolgend bei einer maximalen Temperatur von 1450 ° C gesintert.

Das Sinterregime ist in Tabelle 1 dargestellt. Das während der Sinterung eingesetzte Formiergas besteht aus 97 Ma.-% Stickstoff und 3 Ma.-% Wasserstoff. Während der gesamten Sinterung wird im Sinterofen ein Partialdruck von 0,01 Pa realisiert.

**Tab. 1**

| Aufheizrate | Temperatur | Atmosphäre | Haltezeit |
|---|---|---|---|
| 1 K/min | bis 700 °C | Formiergas | 30 min |
| 1 K/min | bis 1100 °C | Formiergas | 10 h |
| 10 K/min | bis 1450 °C | Vakuum | 1 h |
| 1 K/min | von 1450 auf 1100 °C | inerte Atmosphäre | 3 h |
| 1K/min | auf Raumtemperatur | Formiergas | |

Die einzelnen Regimestufen gemäß Tabelle 1 resultieren aus den spezifischen Transformationsschritten des TiOₓ.

Die Umwandlung von der TiO₂-Modifikation Anatas zu Rutil findet bei ca. 700 °C statt, weshalb die Aufheizrate bis zu dieser Temperatur reduziert worden ist.

Die aktive Reduktionsphase des TiO₂ findet bei ca. 1000 °C statt. Besonders in der Endphase wird durch die Reduktion bei langer Haltezeit von bis zu 15 h eine homogene und vollständige Transformation von TiO₂ in seine Suboxide erreicht, die unter Gasbildung abläuft.

Der Rest der Sinterung findet im Bereich zwischen 1300 bis 1450 °C im Vakuum statt, um eine weitere Reduktion zu verhindern. Die Haltezeit bei der maximalen Temperatur betrug bis 3 h und wurde unter inerter Atmosphäre durchgeführt.

Die Sinterung und Schrumpfung von TiOₓ endete, je nach zu erreichender Magneli-Phase, bei 1300-1400 °C, die von ZrO₂ bei 1400 C. Die Abkühlung erfolgt im Formiergas auf Raumtemperatur, um eine erneute Oxidation und damit Veränderung der TiOₓ-Phase zu vermeiden.

Die erreichten Eigenschaftskombinationen des Sinterkörpers sind in Tabelle 2 angegeben.

**Tabelle 2**

| Eigenschaft des Produktes | ZrO₂ | TiOₓ |
|---|---|---|
| Phasenzusammensetzung | Y-PSZ, 2-3 Mol.-% Y₂O₃ | Ti₈O₁₇, Ti₆O₁₁, Ti₅O₉ und Ti₄O₇ sowie nicht umgesetzter Rutil |
| Spezifischer elektrischer Widerstand | > 10¹⁰-10¹¹ Ωcm | < 10⁻² Ωcm |
| Dichte | ZrO₂: ≈ 6 g/cm³ | TiOₓ: > 3,4 g/cm³ |
| Porosität | < 1% | < 20 % |
| Biegefestigkeit | > 500 MPa | > 100 MPa |
| Farbe | weis, hellgrau | schwarz, dunkelgrau, blau, braun |
| Mittlerer Wärmeausdehnungskoeffizient | 8 - 13 ·10⁻⁶ K⁻¹ | 8 - 10 ·10⁻⁶ K⁻¹ |

### Beispiel 3 gemäß Verfahrensvariante A

Ein TiO₂-Spritzgießfeedstock aus dem Pulver Kronos 3000 mit einem Feststoffgehalt von 54,5 Vol.-% und dem Rest aus einem Binder auf Basis von Licomont^{®} 583, Fa. Clariant wurde gemeinsam mit einem ZrO₂-Spritzgießfeedstock aus dem Pulver Typ Y5-5 des Herstellers United Ceramics Ltd. mit einem Feststoffgehalt von 60 Vol.-% und dem Rest aus derselben Binderbasis auf einer 2-Komponenten-Spritzgießmaschine vom Typ Arburg 370S zu Werkstoffverbundbauteilen in Form stirn- und längsseitig verbundener Biegebruchstäben verarbeitet. Anschließend erfolgte eine gemeinsame Entbinderung (Luftatmosphäre 500°C) und eine Sinterung bei einer maximalen Temperatur von 1400°C.

Das Sinterregime ist in Tabelle 3 dargestellt. Die Sinterung wurde unter strömendem Wasserstoff (3 Liter/min) durchgeführt.

**Tab. 3**

| Aufheizrate | Temperatur | Atmosphäre | Haltezeit |
|---|---|---|---|
| 1 K/min | bis 700 °C | Wasserstoff | 30 min |
| 3 K/min | bis 1200 °C | Wasserstoff | 2 h |
| 3 K/min | bis 1400 °C | Vakuum | 1 h |
| 1 K/min | von 1400 auf 1100 °C | Stickstoff | 3 h |
| 1K/min | auf Raumtemperatur | Stickstoff | |

Die einzelnen Regimestufen gemäß Tabelle 3 resultierten aus den spezifischen Transformationsschritten des TiOₓ.

Die Umwandlung von der TiO₂-Modifikation Anatas zu Rutil findet bei ca. 700 °C statt, weshalb die Aufheizrate bis zu dieser Temperatur reduziert worden ist.

Die aktive Reduktionsphase des TiO₂ findet bei ca. 1000 °C statt. Der Rest der Sinterung findet im Bereich zwischen 1200 bis 1400 °C im Vakuum statt, um eine weitere Reduktion zu verhindern.

Das entstandene TiOₓ wies nach der Sinterung eine offene Porosität von 19 % und eine Dichte von 3,4 g/cm³ auf. Laut der Röntgenphasenanalyse handelt es sich bei diesen Proben neben restlichem Rutil und Ti₈O₁₇ um die kristallographischen Phasen Ti₅O₉ und Ti₄O₇, welche einem O/Ti-Verhältnis von 1,8 bzw. 1,75 entsprechen.

Das Zirkoniumoxid besaß eine Dichte von 5,99 g/cm².

## Patentansprüche

1. Bauteile aus einem keramischen Werkstoffverbund, die aus Sinterkörpern bestehen, die mindestens gleichzeitig zwei oder mehr Bereiche aufweisen, die mindestens aus einem keramischen Material mit elektrisch leitenden Eigenschaften und mindestens aus einem keramischen Material mit elektrisch isolierenden Eigenschaften bestehen, wobei die Bereiche mindestens stoffschlüssig und/oder formschlüssig und/oder kraftschlüssig miteinander verbunden sind, und die Bauteile eine komplexe Bauteilgeometrie aufweisen.

2. Bauteile nach Anspruch 1, bei denen als keramisches Material mit elektrisch leitenden Eigenschaften ein oder mehrere Titansuboxide TiOₓ mit 0 < x < 2 vorhanden sind, und als keramisches Material mit elektrisch isolierenden Eigenschaften TiO₂, ZrO₂, Y₂O₃ und/oder Cordierit (Mg₂Al₄Si₈O₁₈) vorhanden sind, wobei auch Mischungen dieser Materialien vorhanden sein können.

3. Bauteile nach Anspruch 1, bei denen die gleichzeitig vorhandenen Bereiche aus einem keramischen Material mit elektrisch leitenden Eigenschaften und aus einem keramischen Material mit elektrisch isolierenden Eigenschaften stoffschlüssig oder formschlüssig miteinander verbunden sind.

4. Bauteile nach Anspruch 1, bei denen die Bauteile mittels lithografie-basierter additiver Fertigungsmethoden hergestellt worden sind.

5. Bauteile nach Anspruch 1, bei denen die Sinterkörper in den Bereichen der unterschiedlichen keramischen Materialien jeweils eine Dichte von mindestens 70 % der theoretischen Dichte des jeweiligen keramischen Materials aufweisen.

6. Bauteile nach Anspruch 1, bei denen die Bereiche aus einem keramischen Material mit elektrisch leitenden Eigenschaften als Leiterbahnen oder als Elektroden in, an oder auf den Bereichen aus dem keramischen Material mit elektrisch isolierenden Eigenschaften angeordnet sind.

7. Verfahren zur Herstellung von Bauteilen aus einem keramischen Werkstoffverbund, bei dem
- aus einem oder mindestens zwei verschiedenen pulverförmigen keramischen Materialien mit elektrisch isolierenden Eigenschaften, wobei mindestens eines dieser pulverförmigen keramischen Materialien mindestens teilweise zu einer Transformation während der Sinterung in ein keramisches Material mit elektrisch leitenden Eigenschaften befähigt ist, mittels additiver lithografischer oder nichtlithografischer Formgebungsverfahren Formkörper hergestellt werden, und nachfolgend die entbinderten Formkörper gesintert werden, wobei während des Sinterprozesses mindestens ein Wechsel der Sinteratmosphäre durchgeführt wird.
oder bei dem
- aus mindestens einem pulverförmigen keramischen Material mit elektrisch isolierenden Eigenschaften und aus mindestens einem pulverförmigen keramischen Material mit elektrisch leitenden Eigenschaften mittels nichtlithografischer Formgebungsverfahren Formkörper hergestellt werden, und nachfolgend die entbinderten Formkörper in einer nicht-oxidierenden Sinteratmosphäre gesintert werden.

8. Verfahren nach Anspruch 7, bei dem
- als pulverförmige keramische Materialien mit elektrisch leitenden Eigenschaften ein oder mehrere Titansuboxide TiOx mit 0 < x < 2 eingesetzt werden, und
- als pulverförmige keramische Materialien mit elektrisch isolierenden Eigenschaften TiO₂, ZrO₂, Y203 und/oder Cordierit (Mg₂Al₄Si₈O₁₈),
einzeln oder in Mischungen eingesetzt werden.

9. Verfahren nach Anspruch 7, bei dem aus einem oder mindestens zwei pulverförmigen keramischen Materialien mit elektrisch isolierenden Eigenschaften mittels des Vat Photopolymerization (VPP)-Verfahrens als additives lithografisches Verfahren entbinderte Formkörper hergestellt werden.

10. Verfahren nach Anspruch 7, bei dem aus pulverförmigen keramischen Materialien mit elektrisch isolierenden Eigenschaften und aus pulverförmigen keramischen Materialien mit elektrisch leitenden Eigenschaften mittels bekannter pulvertechnologischer Formgebungsverfahren als nichtlithografischer Formgebungsverfahren, wie Co-Spritzgießen, Co-Extrudieren, Verbundfoliengießen, Folienlaminieren, Co-Schlickergießen, Co-Pulverpressen, Multi Material Jetting, Fused Filament Fabrication Formkörper hergestellt werden.

11. Verfahren nach Anspruch 7, bei dem die gesamte Sinterung der entbinderten Formkörper mit Aufheizen bis zu einer maximalen Sintertemperatur und Halten bei dieser Temperatur und Abkühlung unter nicht-oxidierenden Sinterbedingungen unter einer reduzierenden Gasatmosphäre durchgeführt wird.

12. Verfahren nach Anspruch 7, bei dem die Sinterung der entbinderten Formkörper realisiert wird, indem die entbinderten Formkörper auf eine maximale Sintertemperatur aufgeheizt, dort gehalten und dann abgekühlt werden, wobei während des Aufheizens der entbinderte Formkörper unter reduzierender Gasatmosphäre und mindestens während eines Teils der Haltezeit bei der maximalen Sintertemperatur die Sinterung im Vakuum oder in inerter Gasatmosphäre durchgeführt wird, und während der Abkühlung wiederum ein Atmosphärenwechsel in eine reduzierende Gasatmosphäre durchgeführt wird.

13. Verfahren nach Anspruch 7, bei dem nach 5 bis 50 %, vorteilhafterweise nach 20 bis 40 %, noch vorteilhafterweise nach 20 bis 25 %, der Haltezeit bei der maximalen Sintertemperatur ein Atmosphärenwechsel durchgeführt wird.

14. Verfahren nach Anspruch 7, bei dem als maximale Sintertemperatur eine Temperatur von mindestens 1100 °C realisiert wird, und/oder mindestens eine Haltezeit von mindestens 30 min bei der maximalen Sintertemperatur realisiert wird.

15. Verfahren nach Anspruch 7, bei dem zur Realisierung der nicht-oxdierenden Bedingungen bei der Sinterung als reduzierende Gasatmosphäre eine Wasserstoff-, Stickstoff-Wasserstoff-, Argon-Wasserstoff- oder Kohlenmonoxid-Atmosphäre eingesetzt wird, oder als inerte Gasatmosphäre eine Stickstoff- oder Argon-Atmosphäre eingesetzt wird.
